# EUROPÄISCHE PATENTSCHRIFT

(11) **EP 3 184 392 B1**
(45) Veröffentlichungstag und Bekanntmachung des Hinweises auf die Patenterteilung: **16.11.2022**
(21) Anmeldenummer: 16203614.9
(22) Anmeldetag: 13.12.2016
(51) Int. Cl.: B60W 30/09, B60W 30/095, B60W 50/14, B60W 10/18, B60W 10/20, G08G 1/16, B60W 50/00

(54) **VERFAHREN ZUR VERMEIDUNG EINER KOLLISION EINES KRAFTFAHRZEUGS, FAHRERASSISTENZSYSTEM SOWIE KRAFTFAHRZEUG**
METHOD FOR AVOIDING A COLLISION OF A VEHICLE, DRIVER ASSISTANCE SYSTEM AND MOTOR VEHICLE
PROCÉDÉ ANTI-COLLISION D'UN VÉHICULE AUTOMOBILE, SYSTÈME D'ASSISTANCE AU CONDUCTEUR ET VÉHICULE AUTOMOBILE

(30) Priorität: 21.12.2015 DE 102015122409
(43) Veröffentlichungstag der Anmeldung: 28.06.2017
(73) Patentinhaber: Valeo Schalter und Sensoren GmbH, 74321 Bietigheim-Bissingen (DE)
(72) Erfinder: Thunert, Fabian, 74321 Bietigheim-Bissingen (DE); Maraslis, Christos, 74321 Bietigheim-Bissingen (DE)
(74) Vertreter: Pothmann, Karsten

(56) Entgegenhaltungen:
- EP-A1- 1 864 881
- EP-A1- 2 763 120
- WO-A1-2006/042512
- WO-A1-2014/198671
- WO-A2-2011/101223
- DE-A1- 10 231 556
- DE-A1-102011 100 615

## Beschreibung

Die Erfindung betrifft ein Verfahren zur Vermeidung einer Kollision eines Kraftfahrzeugs mit einem, von einer fahrzeugseitigen Erfassungseinrichtung erfassten Objekt in einem Umgebungsbereich des Kraftfahrzeugs. Die Erfindung betrifft außerdem ein Fahrerassistenzsystem sowie ein Kraftfahrzeug.

Vorliegend richtet sich das Interesse auf Fahrerassistenzsysteme, welche dazu ausgelegt sind, einen Fahrer eines Kraftfahrzeugs beim Führen des Kraftfahrzeugs zu unterstützen. Ein solches Fahrerassistenzsystem kann beispielsweise zur Vermeidung einer Kollision des Kraftfahrzeugs mit einem Objekt auf einer Fahrbahn des Kraftfahrzeugs dienen. Dazu kann das Fahrerassistenzsystem beispielsweise als ein automatisches Notbremssystem ausgebildet sein, welches das Kraftfahrzeug bei Vorhandensein des Objektes auf der Fahrbahn des Kraftfahrzeugs automatisch abbremst. Dabei wird bei aktuellen Systemen zur Kollisionsvermeidung in der Regel überprüft, ob sich ein Objekt in einem Fahrschlauch des Kraftfahrzeugs befindet. Der Fahrschlauch beschreibt einen Bereich auf der Fahrbahn, welchen das Kraftfahrzeug voraussichtlich bei der Fahrt überstreichen wird. Befindet sich ein Objekt in dem Fahrschlauch, so kann, wenn das Objekt näher als ein, insbesondere geschwindigkeitsabhängiger, Schwellwert ist, eine automatische Bremsung des Kraftfahrzeugs ausgelöst werden. Dabei ist der Schwellwert umso größer, je größer eine Geschwindigkeit des Kraftfahrzeugs ist. Nachteilig dabei ist, dass bei höheren Geschwindigkeiten des Kraftfahrzeugs schon bei großen Abständen des Kraftfahrzeugs zu dem Objekt gebremst werden muss. Dabei kann es vorkommen, dass eine Bremsung ausgelöst wird, obwohl der Fahrer dem Objekt beziehungsweise dem Hindernis noch ausgewichen wäre beziehungsweise hätte ausweichen können. Vor allem bei Objekten am Rande des Fahrschlauchs ist ein Ausweichmanöver durch den Fahrer besonders wahrscheinlich.

Dazu ist beispielsweise aus der WO 2006/12 55 60 A1 ein Verfahren zur Vermeidung einer Kollision eines Kraftfahrzeugs mit einem Objekt beschrieben, welches auf der Erstellung einer Kollisionszustandskarte basiert. Bei der Kollisionszustandskarte wird für jede mögliche Beschleunigungs-Lenkwinkelkombination des Kraftfahrzeugs angegeben, ob sich dieses bei Einhaltung der jeweiligen Beschleunigungs-Lenkwinkelkombination in einem sicheren Fahrzustand oder in einem Fahrzustand mit Kollisionsgefahr befindet. Falls sich das Kraftfahrzeug in einem Fahrzustand mit Kollisionsgefahr befindet, wird ein entsprechendes Feedbacksignal an einen Fahrer des Kraftfahrzeugs ausgegeben.

Die WO 2011/101 223 A2 offenbart ein Verfahren zum Unterstützen eines Fahrers eines Fahrzeugs bei einem Fahrmanöver, bei welchem die Umgebung des Fahrzeugs in Fahrtrichtung vor dem Fahrzeug erfasst wird. Dabei werden Objekte erfasst, mit denen das Fahrzeug unter Beibehaltung der Fahrtrichtung kollidieren würde. Bei einer drohenden Kollision mit dem Objekt wird dem Fahrer ein notwendiger Lenkeingriff und/oder ein notwendiger Bremseingriff angezeigt und/oder ein automatischer Lenkeingriff und/oder ein automatischer Bremseingriff durchgeführt, um eine Kollision mit dem Objekt zu vermeiden. Dabei wird bei der Ermittlung, ob eine Kollision mit dem Objekt droht, eine Kontur einer Karosserie des Fahrzeugs berücksichtigt.

Aus der DE 10231556 A1 und DE 102011 100615 A1 sind weitere Verfahren dieser Art bekannt, die aber eine komplexere Berechnung des Kollisionsbereich veröffentlichen.

Es ist Aufgabe der vorliegenden Erfindung, eine Lösung aufzuzeigen, wie Kollisionen mit Objekten sowie überflüssige Eingriffe eines Fahrerassistenzsystems besonders einfach und zuverlässig vermieden werden können.

Diese Aufgabe wird erfindungsgemäß durch ein Verfahren, ein Fahrerassistenzsystem sowie ein Kraftfahrzeug mit den Merkmalen gemäß den jeweiligen unabhängigen Patentansprüchen gelöst. Vorteilhafte Ausführungsformen der Erfindung sind Gegenstand der abhängigen Patentansprüche.

Ein erfindungsgemäßes Verfahren dient zur Vermeidung einer Kollision eines Kraftfahrzeugs mit einem, von einer fahrzeugseitigen Erfassungseinrichtung erfassten Objekt in einem Umgebungsbereich des Kraftfahrzeugs. Darüber hinaus wird bei Erfassung des Objektes in dem Umgebungsbereich ein Kollisionsbereich in Abhängigkeit von vorbestimmten, beidseitigen Maximalradlenkwinkeln des Kraftfahrzeugs bestimmt und eine kollisionsvermeidende Maßnahme für das Kraftfahrzeug eingeleitet, falls sich das Objekt innerhalb des Kollisionsbereiches befindet.

Bei dem Verfahren zur Kollisionsvermeidung wird von der fahrzeugseitigen Erfassungseinrichtung ein Umgebungsbereich des Kraftfahrzeugs überwacht.

Insbesondere wird ein in Fahrtrichtung vor dem Kraftfahrzeug liegender Umgebungsbereich überwacht. Dies bedeutet, dass bei einer Vorwärtsfahrt des Kraftfahrzeugs ein Umgebungsbereich vor dem Kraftfahrzeug, also der an einen Frontbereich des Kraftfahrzeugs angrenzende Umgebungsbereich, überwacht wird und bei einer Rückwärtsfahrt des Kraftfahrzeugs ein Umgebungsbereich hinter dem Kraftfahrzeug, also der an einen Heckbereich des Kraftfahrzeugs angrenzende Umgebungsbereich, überwacht wird. Eine solche Erfassungseinrichtung zur Überwachung des Umgebungsbereiches kann beispielsweise eine Kamera und/oder ein Radarsensor und/oder ein Ultraschallsensor und/oder ein Laserscanner sein.

Anhand der, von der Erfassungseinrichtung erfassten Umgebungsdaten kann das Objekt in dem Umgebungsbereich erfasst werden. Dabei wird insbesondere ein Objekt erfasst, welches sich auf einer Fahrbahn des Kraftfahrzeugs, insbesondere in einem für das Kraftfahrzeug bestimmten Fahrschlauch, befindet und mit welchem daher eine Kollision des Kraftfahrzeugs drohen könnte. Der Fahrschlauch ist dabei ein in Abhängigkeit von der aktuellen Fahrtrichtung des Kraftfahrzeugs vorhergesagter Bereich, welchen das Kraftfahrzeug zukünftig bei einer Fahrt unter Beibehaltung der aktuellen Fahrtrichtung überstreichen beziehungsweise befahren wird. Außerdem kann die Erfassungseinrichtung einen Abstand des Objektes relativ zum Kraftfahrzeug bestimmen. Sobald das Objekt in dem Umgebungsbereich des Kraftfahrzeugs, insbesondere innerhalb des Fahrschlauches des Kraftfahrzeugs, erfasst wurde, wird der Kollisionsbereich für das Kraftfahrzeug, beispielsweise von einer Steuereinrichtung eines Fahrerassistenzsystems des Kraftfahrzeugs, bestimmt. Dabei wird der Kollisionsbereich insbesondere unmittelbar nach der Erfassung des Objektes bestimmt. Der Kollisionsbereich liegt insbesondere in einer Fahrtrichtung des Kraftfahrzeugs auf einer Fahrbahn des Kraftfahrzeugs vor dem Kraftfahrzeug und ist angrenzend an das Kraftfahrzeug bestimmt. Insbesondere liegt der Kollisionsbereich innerhalb des Fahrschlauches. Der Kollisionsbereich kann beispielsweise als ein zweidimensionaler Bereich bestimmt werden.

Dieser Kollisionsbereich ist abhängig von den beidseitigen Maximalradlenkwinkeln. Die beidseitigen Maximalradlenkwinkel sind dabei die aktuellen, maximal zulässigen Radlenkwinkel beziehungsweise Lenkwinkel des Kraftfahrzeugs nach jeder Seite. Diese Maximalradlenkwinkel können zum Durchführen einer Kurvenfahrt des Kraftfahrzeugs bereitgestellt werden, durch welche das Kraftfahrzeug dem Objekt beziehungsweise Hindernis auszuweichen versucht. Die Maximalradlenkwinkel beziehungsweise maximal zulässigen Radlenkwinkel können beispielsweise durch Bereitstellen einer maximal zulässigen Drehung eines Lenkrades des Kraftfahrzeugs nach rechts beziehungsweise im Uhrzeigersinn und nach links beziehungsweise gegen den Uhrzeigersinn bereitgestellt werden, durch welche Räder des Kraftfahrzeugs nach der entsprechenden Seite, also nach rechts und nach links, eingeschlagen werden. Dadurch bewegt sich das Kraftfahrzeug in der Kurvenfahrt entlang einer Kreisbahn, deren Radius durch den jeweiligen Radlenkwinkel vorgegeben ist. Durch Bereitstellen des Maximalradlenkwinkel wird dabei eine Kreisbahn mit einem minimal zulässigen Radius bereitgestellt. Anders ausgedrückt, wird durch Vorgeben der maximal zulässigen Radlenkwinkel für beide Seiten die kleinstmögliche Kreisbahn bestimmt, entlang welcher sich das Kraftfahrzeug während des Ausweichversuchs zum Umfahren des Hindernisses bewegen kann. Um rechts an dem Hindernis vorbeizufahren, kann ein erster Maximalradlenkwinkel nach rechts vorgegeben werden, sodass sich das Kraftfahrzeug entlang einer ersten, rechtsgekrümmten Kreisbahn bewegt. Um links an dem Hindernis vorbeizufahren, kann ein zweiter Maximalradlenkwinkel nach links vorgegeben werden, sodass sich das Kraftfahrzeug entlang einer ersten, linksgekrümmten Kreisbahn bewegt. Die jeweilige Kreisbahn wird dabei insbesondere durch die am weitesten in ein Kurvenäußeres herausragenden Teile des Kraftfahrzeugs, insbesondere das dem Kurvenäußeren zugewandte Seitenverkleidungsteil beziehungsweise Karosserieteil des Kraftfahrzeugs, bestimmt. Anders ausgedrückt, wird diejenige Kreisbahn bestimmt, entlang welcher sich das am weitesten in das Kurvenäußere herausragende Teil des Kraftfahrzeugs bewegen wird.

Die Maximalradlenkwinkel entsprechen dabei nicht zwangsläufig den maximalen Radlenkwinkeln, die für das Kraftfahrzeug möglich sind. Anders ausgedrückt sind die Maximalradlenkwinkel nicht zwangsläufig diejenigen Radlenkwinkel, welche sich bei vollem Lenkeinschlag in die jeweilige Richtung einstellen und durch welchen der Wendekreis des Kraftfahrzeug als die kleinstmögliche Kreisbahn definiert wird. Die Maximalradlenkwinkel sind vielmehr diejenigen Radlenkwinkel, welche, insbesondere unter Berücksichtigung einer aktuellen Geschwindigkeit des Kraftfahrzeugs, für das Kraftfahrzeug momentan durchführbar und zulässig sind, ohne dass das Kraftfahrzeug beispielsweise ins Schleudern gerät.

Durch diese beidseitigen Maximalradlenkwinkel wird der Kollisionsbereich bestimmt. So kann der Kollisionsbereich durch die Kreisbahnabschnitte der Kreisbahnen, welche das Kraftfahrzeug mit den Maximalradlenkwinkeln abfährt, bestimmt werden. Dabei entspricht eine maximale Breite des Kollisionsbereiches in Fahrzeugquerrichtung insbesondere einer Breite des Kraftfahrzeugs. Der Kollisionsbereich verjüngt beziehungsweise verschmälert sich in Fahrtrichtung. Dann wird überprüft, ob sich das erfasste Objekt innerhalb des Kollisionsbereiches befindet. Wenn sich das Objekt innerhalb des Kollisionsbereiches befindet, so ist dies ein Zeichen dafür, dass ein Ausweichmanöver des Kraftfahrzeugs nicht kollisionsfrei durchführbar ist. Dies bedeutet, dass das Kraftfahrzeug auch unter Vorgabe eines der jeweiligen Maximalradlenkwinkel das Objekt nicht umfahren kann und bei dem Ausweichversuch mit dem Objekt kollidieren wird. Das Objekt wird somit als unumfahrbahr klassifiziert beziehungsweise eine Kollision mit dem Objekt als unvermeidbar klassifiziert. Wenn sich das Objekt außerhalb des Kollisionsbereiches befindet, so wird davon ausgegangen, dass das Objekt von dem Kraftfahrzeug noch umfahren werden kann. Dies bedeutet, dass das Kraftfahrzeug das Objekt zumindest unter der Vorgabe eines der jeweiligen Maximalradlenkwinkel kollisionsfrei umfahren kann und bei dem Ausweichversuch nicht mit dem Objekt kollidieren wird. Das Objekt wird als umfahrbahr klassifiziert beziehungsweise eine Kollision mit dem Objekt als vermeidbar klassifiziert.

Die kollisionsvermeidende Maßnahme wird nur eingeleitet, wenn sich das Objekt innerhalb des Kollisionsbereiches befindet oder in den Kollisionsbereich eintritt. Somit kann verhindert werden, dass die kollisionsvermeidende Maßnahme überflüssigerweise erfolgt. Gleichzeitig können mittels des Verfahrens durch Einleiten der kollisionsvermeidenden Maßnahme zuverlässig sichere Kollisionen mit Objekten in dem Umgebungsbereich verhindert werden.

Besonders bevorzugt wird der Kollisionsbereich in Abhängigkeit von einer aktuellen Geschwindigkeit des Kraftfahrzeugs bestimmt. Dies bedeutet, dass insbesondere die maximal zulässigen Radlenkwinkel in Abhängigkeit von der Geschwindigkeit des Kraftfahrzeugs vorgegeben werden. Insbesondere verkleinert sich der Kollisionsbereich beziehungsweise eine Fläche des Kollisionsbereiches, wenn die Geschwindigkeit des Kraftfahrzeugs verringert wird, da bei niedrigen Geschwindigkeiten größere Maximalradlenkwinkel zulässig sind als bei hohen Geschwindigkeiten. Dies bedeutet, dass der Fahrer des Kraftfahrzeugs bei niedrigen Geschwindigkeiten das Lenkrad stärker einschlagen kann beziehungsweise darf, also dass höhere Lenkeinschlagwinkel zulässig sind, um einen Ausweichversuch zum Umfahren des Objektes zu unternehmen, als bei höheren Geschwindigkeiten. Bei höheren Geschwindigkeiten könnte das Kraftfahrzeug nämlich ins Schleudern geraten. Durch das Anpassen des Kollisionsbereiches an die aktuelle Geschwindigkeit des Kraftfahrzeugs werden also vor Einleitung der kollisionsvermeidenden Maßnahme nur Fahrmanöver zugelassen, welche mit der aktuellen Geschwindigkeit des Kraftfahrzeugs gefahrlos möglich sind.

Dabei kann vorgesehen sein, dass als die kollisionsvermeidende Maßnahme das Kraftfahrzeug automatisch abgebremst wird. Dazu kann die Steuereinrichtung beispielsweise in ein Bremssystem des Kraftfahrzeugs eingreifen und beispielsweise eine Notbremsung des Kraftfahrzeugs durchführen, falls kein kollisionsfreies Umfahren des Objektes mehr möglich ist. Bei der Notbremsung kommt das Kraftfahrzeug vollständig zum Stehen. Es kann aber auch vorgesehen sein, dass das Kraftfahrzeug nur soweit abgebremst wird, also eine aktuelle Geschwindigkeit des Kraftfahrzeugs nur soweit verringert beziehungsweise reduziert wird, bis das Objekt den Kollisionsbereich wieder verlässt, also bis das Objekt nicht mehr in dem in Abhängigkeit von der verringerten Geschwindigkeit neu bestimmten Kollisionsbereich liegt. Dadurch dass bei geringeren Geschwindigkeiten insbesondere größere Maximallenkwinkel zulässig sind, wird der Kollisionsbereich nämlich beim Abbremsen des Kraftfahrzeugs wieder verkleinert. Dabei kann es vorkommen, dass das Objekt dann nicht mehr innerhalb des Kollisionsbereiches liegt und vom Fahrer durch Bereitstellen des zu der aktuellen Geschwindigkeit korrespondierenden Maximallenkwinkels umfahren werden kann. Das Verfahren stellt somit eine hohe Sicherheit für den Straßenverkehr bei gleichzeitig hohem Fahrkomfort für den Fahrer bereit.

Alternativ oder zusätzlich kann als die kollisionsvermeidende Maßnahme ein Warnsignal für einen Fahrer des Kraftfahrzeugs ausgegeben werden. Bei Ausgabe des Warnsignals kann der Fahrer dann selbständig das Kraftfahrzeug abbremsen. Ein solches Warnsignal kann beispielsweise ein akustisches und/oder optisches und/oder haptisches Warnsignal sein, welches mittels einer fahrzeugseitigen Ausgabeeinrichtung ausgegeben wird und durch welches der Fahrer darauf aufmerksam gemacht wird, dass eine Kollision mit dem Objekt droht beziehungsweise unvermeidbar ist. Somit wird dem Fahrer verdeutlicht, dass kein kollisionsfreies Ausweichmanöver mehr möglich ist. Damit wird verhindert, dass der Fahrer ein risikobehaftetes Ausweichmanöver durchführt, weil er fälschlicherweise annimmt, dass das Hindernis umfahren werden kann.

Vorzugsweise wird ein das Kraftfahrzeug umgebender Toleranzbereich bestimmt und der Kollisionsbereich in Abhängigkeit von dem Toleranzbereich bestimmt. Dieser Toleranzbereich ist insbesondere angrenzend an die Außenverkleidung des Kraftfahrzeugs bestimmt. Eine Außenkontur des Kraftfahrzeugs, ausgehend von welcher die Kreisbahnen bestimmt werden können, entlang welcher sich das Kraftfahrzeug mit den jeweiligen Maximalradlenkwinkeln bewegt, kann durch eine Kontur des Toleranzbereiches angenähert werden. Somit können die Kreisbahnen insbesondere bezogen auf den am weitesten ins Kurvenäußere ragenden Punkt des Toleranzbereiches bestimmt werden. Durch die Bestimmung des Kollisionsbereichs in Abhängigkeit von dem Toleranzbereich wird eine Fläche des Kollisionsbereiches vergrößert. Dadurch kann, beispielsweise bei Messungenauigkeiten bei der Abstandsbestimmung des Objektes, verhindert werden, dass eine Kollision mit dem Objekt droht, welches die Steuereinrichtung fälschlicherweise als umfahrbar klassifiziert hat.

In einer Ausführungsform des Verfahrens wird zum Bestimmen des Kollisionsbereiches ein Wert für eine maximal zulässige Änderung des Radlenkwinkels des Kraftfahrzeugs vorgegeben und die beidseitigen Maximalradlenkwinkel in Abhängigkeit von einem aktuellen Radlenkwinkel des Kraftfahrzeugs und dem maximal zulässigen Wert für die Änderung bestimmt. Dies bedeutet, dass, beispielsweise mittels eines Lenkwinkelsensors, der aktuelle Lenkwinkel beziehungsweise Radlenkwinkel des Kraftfahrzeugs erfasst wird. Anhand dieses aktuellen Radlenkwinkels kann eine Fahrtrajektorie für das Kraftfahrzeug bestimmt werden, entlang welcher sich das Kraftfahrzeug unter Beibehaltung dieses erfassten aktuellen Lenkwinkels bewegen wird. Zu diesem aktuellen Radlenkwinkel kann der Wert für die maximal zulässige Änderung nach beiden Seiten addiert werden. Damit ergeben sich die beiden maximal zulässigen Radlenkwinkel nach beiden Seiten. Der Kollisionsbereich erstreckt sich dabei entlang der in Abhängigkeit von dem aktuellen Radlenkwinkel bestimmten Fahrtrajektorie. Bei einer Geradeausfahrt des Kraftfahrzeugs, also beispielsweise bei einem aktuellen Radlenkwinkel von 0 Grad, entsprechen die beiden Maximalradlenkwinkel betragsmäßig dem Wert der Änderung. Die Fahrtrajektorie und damit der Kollisionsbereich erstrecken sich dabei entlang einer verlängerten Fahrzeuglängsachse des Kraftfahrzeugs in Fahrtrichtung des Kraftfahrzeugs, wobei der Kollisionsbereich symmetrisch bezüglich der Fahrzeuglängsachse ist. Wenn die Räder des Kraftfahrzeugs in eine Richtung eingeschlagen sind, so wird die Fahrtrajektorie in diese Richtung verkrümmt. Der Kollisionsbereich wird dabei ebenfalls verkrümmt. Dabei wird der Wert für die maximal zulässige Änderung des Radlenkwinkels in Abhängigkeit von der aktuellen Geschwindigkeit des Kraftfahrzeugs vorgegeben. Dabei sind mit sinkender Geschwindigkeit des Kraftfahrzeugs höhere Werte für die maximal zulässige Änderung vorgegeben. Dies bedeutet wiederum, dass mit sinkender Geschwindigkeit des Kraftfahrzeugs stärkere Lenkeingriffe beziehungsweise Lenkeinschläge zulässig sind.

Dabei wird basierend auf einem ersten Maximalradlenkwinkel zum rechtsseitigen Ausweichen eine erste Fahrtrajektorie ausgehend von dem Kraftfahrzeug geplant, basierend auf einem zweiten Maximalradlenkwinkel zum linksseitigen Ausweichen eine zweite Fahrtrajektorie ausgehend von dem Kraftfahrzeug geplant und die Fahrtrajektorie als Begrenzung des Kollisionsbereiches bestimmt. Die Fahrtrajektorien sind dabei insbesondere Kreisbahnabschnitte, entlang welchen sich das Kraftfahrzeug mit dem jeweiligen Maximalradlenkwinkel bewegt. Die Fahrtrajektorien können beispielsweise mittels eines Einspurmodells des Kraftfahrzeugs bestimmt werden. Dabei bewegt sich jeweils der dem Kurvenäußeren zugewandte Punkt des Kraftfahrzeugs, welcher am weitesten in das Kurvenäußere herausragt, entlang der Kreisbahn. Für das rechtsseitige Ausweichmanöver wird die Fahrtrajektorie ausgehend von einer linken Außenseite des Kraftfahrzeugs bestimmt, da beim Ausweichen diese linksseitige Außenseite des Kraftfahrzeugs dem Objekt zugewandt ist. So kann beispielsweise ausgehend von dem linken Kotflügel die Fahrtrajektorie als eine Bogenlinie bestimmt werden. Für das linksseitige Ausweichen wird die Fahrtrajektorie ausgehend von einer rechtsseitigen Außenseite des Kraftfahrzeugs, beispielsweise ausgehend von dem rechten Kotflügel des Kraftfahrzeugs, als eine Bogenlinie bestimmt. Diese rechte Außenseite ist beim linksseitigen Umfahren des Objektes dem Objekt zugewandt. Dabei schneiden sich die für beide Maximalradlenkwinkel bestimmten Bogenlinien beziehungsweise Fahrtrajektorien in einem Punkt, welcher auf der Fahrbahn in Fahrtrichtung vor dem Kraftfahrzeug liegt. Bei einer Geradeausfahrt des Kraftfahrzeugs liegt dieser Punkt auf der verlängerten Fahrzeuglängsachse des Kraftfahrzeugs. Der Bereich, welcher dabei von einer Außenseite des Kraftfahrzeugs sowie den Fahrtrajektorien eingeschlossen wird, wird als der Kollisionsbereich definiert. Bei einer Vorwärtsfahrt des Kraftfahrzeugs wird dieser Bereich durch einen Frontbereich des Kraftfahrzeugs sowie die Fahrtrajektorien begrenzt und bei einer Rückwärtsfahrt des Kraftfahrzeugs durch einen Heckbereich sowie die Fahrtrajektorien begrenzt.

Alternativ dazu kann in Abhängigkeit von einem aktuellen Radlenkwinkel des Kraftfahrzeugs ein in Fahrtrichtung des Kraftfahrzeugs vor dem Kraftfahrzeug liegender Fahrschlauch für das Kraftfahrzeug bestimmt werden, durch welchen ein voraussichtlich von dem Kraftfahrzeug befahrener Bereich charakterisiert wird, ein Punkt innerhalb des Fahrschlauchs bestimmt werden, ausgehend von dem Kraftfahrzeug zwei Fahrtrajektorien derart bestimmt werden, dass sie sich in dem Punkt schneiden, und die sich in dem Punkt schneidenden, die Maximalradlenkwinkel charakterisierenden Fahrtrajektorien als Begrenzungen des Kollisionsbereiches bestimmt werden. Gemäß dieser Ausführungsform werden also die Maximalradlenkwinkel nicht direkt bestimmt beziehungsweise berechnet, sondern ergeben sich aus der Konstruktion der sich in dem definierten Punkt schneidenden Fahrtrajektorien. Dazu wird zunächst der Fahrschlauch bestimmt. Es kann auch vorgesehen sein, dass dieser Fahrschlauch im Zusammenhang mit weiteren Assistenzfunktionen, welche beispielsweise von dem Fahrerassistenzsystem bereitgestellt werden, bereits bestimmt ist. Dieser kann dann der Steuereinrichtung bereitgestellt werden. Der Fahrschlauch wird dabei als ein Bereich bestimmt, welcher sich entlang einer vorhergesagten Fahrtrajektorie des Kraftfahrzeugs erstreckt. Die Fahrtrajektorie wird dabei in Abhängigkeit von einem aktuellen Radlenkwinkel des Kraftfahrzeugs vorhergesagt. Durch den Fahrschlauch sind also die aktuellen Radlenkwinkel des Kraftfahrzeugs bereits berücksichtigt. Bei einer Geradeausfahrt des Kraftfahrzeugs erstreckt sich dieser Bereich entlang der Fahrzeuglängsachse, wobei sich Begrenzungen des Fahrschlauches parallel zu der Fahrzeuglängsachse ausgehend von den Außenseiten, beispielsweise Kotflügeln, des Kraftfahrzeugs in Fahrtrichtung des Kraftfahrzeugs erstrecken. Bei einer Kurvenfahrt des Kraftfahrzeugs wird dieser Fahrschlauch entsprechend verbogen und erstreckt sich dabei entlang der vorhergesagten Fahrtrajektorie, deren Radius durch den aktuellen Radlenkwinkel vorgegeben ist.

Dabei ist es nun vorgesehen, dass der Punkt definiert wird und in einem vorbestimmten Abstand in den Fahrschlauch gelegt wird. Dann werden ausgehend von dem Kraftfahrzeug, beispielsweise ausgehend von den Kotflügeln des Kraftfahrzeugs, Bogenlinien bestimmt, welche einen konstanten Radius aufweisen und sich in dem vorbestimmten Punkt schneiden. Dabei wird ausgehend von einer linken Außenseite des Kraftfahrzeugs eine rechtsgekrümmte Bogenlinie bestimmt und ausgehend von der rechten Außenseite des Kraftfahrzeugs eine linksgekrümmte Bogenlinie bestimmt. Der Radius der Bogenlinie ergibt sich dabei durch die Lage des definierten Punktes zu dem Kraftfahrzeug. Dabei wird ein Abstand des Punktes vorzugsweise in Abhängigkeit von einer Geschwindigkeit des Kraftfahrzeugs bestimmt. Somit wird die aktuelle Geschwindigkeit bei der Bestimmung der Größe des Kollisionsbereiches berücksichtigt. Dabei wird der Abstand des Punktes umso kleiner vorgegeben, je geringer die Geschwindigkeit des Kraftfahrzeugs ist. Außerdem wird der Punkt in einer Richtung senkrecht zu einer Fahrtrichtung des Kraftfahrzeugs mittig in dem Fahrschlauch liegend bestimmt. Mit anderen Worten bedeutet dies, dass der Punkt auf halber Breite des Fahrschlauchs innerhalb des Fahrschlauchs liegt. Bei einer Geradeausfahrt des Kraftfahrzeugs liegt der Punkt also auf einer Fahrzeuglängsachse. Durch die Vorgabe des Punktes ist das Verfahren besonders einfach und unaufwändig gestaltet, da die Maximallenkwinkel nicht berechnet werden müssen. Der Kollisionsbereich beziehungsweise eine Größe des Kollisionsbereiches wird auf einfache Weise durch die Lage des Punktes relativ zum Kraftfahrzeug vorgegeben.

Die Erfindung betrifft außerdem ein Fahrerassistenzsystem mit einer Erfassungseinrichtung zum Erfassen eines Objektes in einem Umgebungsbereich des Kraftfahrzeugs und mit einer Steuereinrichtung, welche dazu ausgelegt ist, ein erfindungsgemäßes Verfahren durchzuführen. Die Steuereinrichtung kann außerdem dazu ausgelegt sein, in ein Bremssystem des Kraftfahrzeugs einzugreifen und das Kraftfahrzeug als kollisionsvermeidende Maßnahme beispielsweise abzubremsen und/oder ein Warnsignal für eine Ausgabeeinrichtung des Kraftfahrzeugs zu generieren.

Die Erfassungseinrichtung des Fahrerassistenzsystems kann beispielsweise eine Kamera und/oder einen Radarsensor und/oder einen Laserscanner und/oder einen Ultraschallsensor aufweisen. Mittels der Erfassungseinrichtung können sowohl die Objekte als auch deren Positionen bezüglich des Kraftfahrzeugs in dem Umgebungsbereich bestimmt werden.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie für das erfindungsgemäße Kraftfahrzeug.

Mit Angaben "vorne", "hinten", "rechts", "links", "Fahrtrichtung" (8), "Fahrzeuglängsrichtung" (L), " Fahrzeugquerrichtung" (Q), "seitlich", etc. sind bei einem vor dem Kraftfahrzeug stehenden und in Richtung einer Fahrzeuglängsrichtung des Kraftfahrzeugs blickenden Beobachter gegebene Positionen und Orientierungen angegeben.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform eines erfindungsgemäßen Kraftfahrzeugs;
- Fig. 2: eine schematische Darstellung des Kraftfahrzeugs gemäß Fig. 1 mit einem Kollisionsbereich; und
- Fig. 3: eine weitere schematische Darstellung des erfindungsgemäßen Kraftfahrzeugs gemäß Fig. 1 mit einem Kollisionsbereich.

In den Figuren sind gleiche sowie funktionsgleiche Elemente mit den gleichen Bezugszeichen versehen.

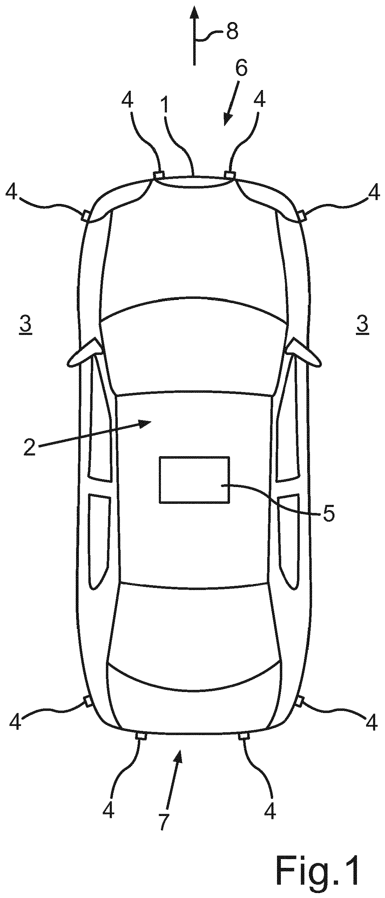

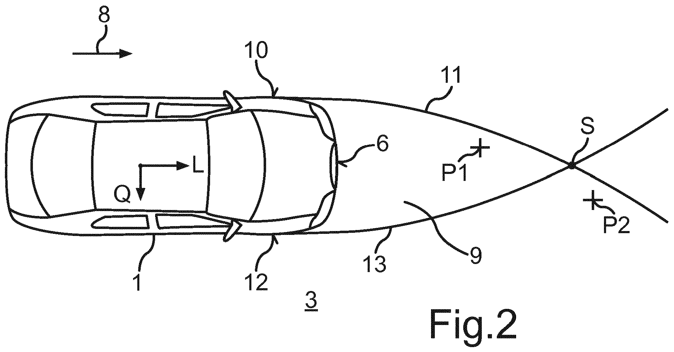

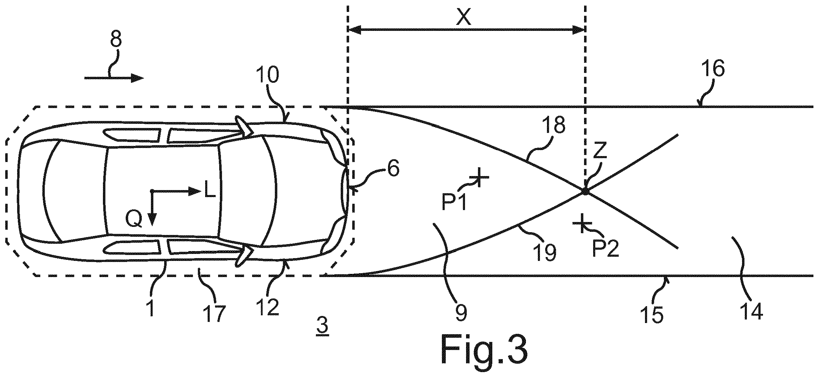

Fig. 1 zeigt ein Kraftfahrzeug 1 gemäß der vorliegenden Erfindung. Das Kraftfahrzeug 1 ist im vorliegenden Fall als ein Personenkraftwagen ausgebildet. Das Kraftfahrzeug 1 umfasst ein Fahrerassistenzsystem 2, welches dazu ausgelegt ist, eine Kollision des Kraftfahrzeugs 1 mit Objekten P1, P2 (siehe Fig. 2 und 3) in einem Umgebungsbereich 3 des Kraftfahrzeugs 1 zu verhindern beziehungsweise zu vermeiden. Dazu weist das Kraftfahrzeug 1 eine Erfassungseinrichtung 4 auf. Mittels der Erfassungseinrichtung 4, welche beispielsweise als ein Ultraschallsensor ausgebildet ist, kann der Umgebungsbereich 3 des Kraftfahrzeugs 1 überwacht werden. Außerdem weist das Fahrerassistenzsystem 2 eine Steuereinrichtung 5 auf, welche beispielsweise durch ein fahrzeugseitiges Steuergerät ausgebildet ist.

Im vorliegenden Fall sind dabei vier Erfassungseinrichtungen 4 an einem Frontbereich 6 des Kraftfahrzeugs 1 angeordnet, mit welchen der Umgebungsbereich 3 vor dem Kraftfahrzeug 1 überwacht werden kann, und vier weitere Erfassungseinrichtungen 4 an einem Heckbereich 7 des Kraftfahrzeugs 1 angeordnet, mit welchen der Umgebungsbereich 3 hinter dem Kraftfahrzeug 1 überwacht werden kann. Mittels der Erfassungseinrichtungen 4 kann ein in einer Fahrtrichtung 8 des Kraftfahrzeugs 1 vor dem Kraftfahrzeug 1 liegender Umgebungsbereich 3 überwacht werden. Bei einer Vorwärtsfahrt des Kraftfahrzeugs 1 ist dies der vor dem Kraftfahrzeug 1 liegende Umgebungsbereich 3 und bei einer Rückwärtsfahrt des Kraftfahrzeugs 1 der hinter dem Kraftfahrzeug 1 liegende Umgebungsbereich 3. Außerdem kann von der Erfassungseinrichtung 4 eine Position der Objekte P1, P2 relativ zum Kraftfahrzeug 1 erfasst werden.

Um nun eine Kollision des Kraftfahrzeugs 1 mit den Objekten P1, P2 zu vermeiden, wird, wie in Fig. 2 gezeigt, ein Kollisionsbereich 9 für das Kraftfahrzeug 1 bestimmt. Der Kollisionsbereich 9 wird dabei in Abhängigkeit von beidseitigen Maximalradlenkwinkeln beziehungsweise maximal zulässigen Radlenkwinkeln des Kraftfahrzeugs 1 bestimmt. Die beidseitigen maximal zulässigen Radlenkwinkel ergeben sich durch die jeweiligen maximal zulässigen Lenkradeinschläge des Kraftfahrzeugs 1 nach links und nach rechts. Somit kann ein erster Maximalradlenkwinkel für ein rechtsseitiges Ausweichen und ein zweiter Maximalradlenkwinkel für ein linksseitiges Ausweichen vorgegeben werden. Beim rechtsseitigen Ausweichen wird versucht, rechts an dem Objekt P1, P2 vorbeizufahren. Beim linksseitigen Ausweichen wird versucht, links an dem Objekt P1, P2 vorbeizufahren.

Der Kollisionsbereich 9 wird dabei gemäß der Ausführungsform von Fig. 2 in Abhängigkeit von einem aktuellen Radlenkwinkel des Kraftfahrzeugs 1 sowie einer maximal zulässigen Änderung des Radlenkwinkels bestimmt. Da sich das Kraftfahrzeug 1 hier in einer Geradeausfahrt befindet, ist der aktuelle Radlenkwinkel hier 0 Grad. Die maximale Änderung entspricht also hier dem maximalen Radlenkwinkel. Zum rechtsseitigen Umfahren der Objekte P1, P2 wird ausgehend von einer linken Außenseite 10 des Kraftfahrzeugs 1, insbesondere ausgehend von einem linken Kotflügel des Kraftfahrzeugs 1, eine erste Fahrtrajektorie 11 bestimmt, entlang welcher das Kraftfahrzeug 1 eine Kurvenfahrt durchführt und entlang welcher sich ein Punkt auf der Außenseite 10 des Kraftfahrzeugs 1 bei der Kurvenfahrt nach rechts voraussichtlich bewegen wird. Der Punkt auf der Außenseite 10 ist dabei derjenige Punkt, welche bei der Kurvenfahrt des Kraftfahrzeugs 1 am weitesten in Richtung des Kurvenäußeren ragt. Die Fahrtrajektorie 11 ist dabei eine nach rechts gekrümmte Bogenlinie. Für ein linksseitiges Ausweichen des Kraftfahrzeugs 1 wird ausgehend von einer rechten Außenseite 12 des Kraftfahrzeugs 1, insbesondere ausgehend von einem rechten Kotflügel des Kraftfahrzeugs 1, eine zweite Fahrtrajektorie 13 bestimmt. Entlang dieser zweiten Fahrtrajektorie 13 führt das Kraftfahrzeug 1 eine Kurvenfahrt nach links durch. Dadurch bewegt sich die rechte Außenseite 12 des Kraftfahrzeugs 1, insbesondere der am weitesten außen liegende Punkt der Außenseite 12, bei der Kurvenfahrt entlang der Fahrtrajektorie 13. Die beiden bogenlinienförmigen Fahrtrajektorien 11, 13 schneiden sich dabei in einem Schnittpunkt S. Der Kollisionsbereich 9 wird dabei als derjenige Bereich definiert, welcher von der Frontseite 6 des Kraftfahrzeugs 1 sowie den Fahrtrajektorien 11, 13 eingeschlossen wird. Eine maximale Breite des Kollisionsbereiches 9 entlang einer Fahrzeugquerrichtung Q entspricht einer Breite des Kraftfahrzeugs 1, also einem Abstand zwischen den beiden Außenseiten 10, 12 des Kraftfahrzeugs 1. Der Kollisionsbereich 9 verjüngt sich dabei entlang der Fahrtrichtung 8 nach vorne hin.

Der Wert der maximalen Änderung wird dabei in Abhängigkeit von einer aktuellen Geschwindigkeit des Kraftfahrzeugs 1 angegeben. Dadurch ist auch der Kollisionsbereich 9 beziehungsweise eine Fläche des Kollisionsbereiches 9 abhängig von der aktuellen Geschwindigkeit des Kraftfahrzeugs 1.

Dann wird überprüft, ob sich die Objekte P1, P2 innerhalb des Kollisionsbereiches 9 befinden. Hier befindet sich das Objekt P2 außerhalb des Kollisionsbereiches 9. Dies bedeutet, dass davon ausgegangen werden kann, dass das Objekt P2 von dem Fahrer des Kraftfahrzeugs 1 selbst umfahren werden kann und daher keine Kollision mit dem Objekt P2 droht. Das Objekt P2 wird also als umfahrbar klassifiziert. Das Objekt P1 hingegen befindet sich innerhalb des Kollisionsbereiches 9. Dies bedeutet, dass der Fahrer des Kraftfahrzeugs 1, auch unter Bereitstellung der Maximalradlenkwinkel, die Kollision mit dem Objekt P1 nicht mehr vermeiden kann. Das Objekt P1 wird als unumfahrbar klassifiziert. Daher wird von der Steuereinrichtung 5 eine kollisionsvermeidende Maßnahme eingeleitet. Diese kollisionsvermeidende Maßnahme kann beispielsweise ein automatisches Abbremsen des Kraftfahrzeugs 1 sein. Alternativ oder zusätzlich kann als die kollisionsvermeidende Maßnahme ein Warnsignal an den Fahrer des Kraftfahrzeugs 1 ausgegeben werden.

Eine alternative Ausführungsform zur Bestimmung des Kollisionsbereiches 9 ist in Fig. 3 gezeigt. Dazu wird zunächst ein Fahrschlauch 14 für das Kraftfahrzeug 1 bestimmt. Dieser Fahrschlauch 14 ist ein Bereich, welchen das Kraftfahrzeug 1 beziehungsweise eine Karosserie des Kraftfahrzeugs 1 bei einer zukünftigen Fahrt unter Beibehaltung des aktuellen Radlenkwinkels überstreicht. Hier befindet sich das Fahrzeug 1 auf einer Geradeausfahrt. Daher erstreckt sich der Fahrschlauch 14 entlang einer Fahrzeuglängsrichtung L, wobei seitliche Begrenzungen 15, 16 des Fahrschlauches 14 sich parallel zu der Fahrzeuglängsrichtung L erstrecken. Außerdem ist hier ein Toleranzbereich 17 gezeigt, welcher angrenzend an das Kraftfahrzeug 1 ausgebildet ist und das Kraftfahrzeug 1 vollständig umgibt. Dabei ist der Fahrschlauch 14 in Abhängigkeit von dem Toleranzbereich 17 bestimmt, indem die seitlichen Begrenzungen 15, 16 des Fahrschlauches 14 sich ausgehend von Seitenrändern des Toleranzbereiches 17 erstrecken. Eine Breite des Fahrschlauches 14 entlang der Fahrzeugquerrichtung entspricht also einer Breite des Toleranzbereiches 17.

Gemäß dieser Ausführungsform werden jedoch nicht zuerst die maximal möglichen Radlenkwinkel bestimmt und basierend auf diesen Maximalradlenkwinkeln die Fahrtrajektorien 11, 13 bestimmt. Vielmehr wird ein Punkt Z definiert und in einem vorbestimmten Abstand x innerhalb des Fahrschlauches 14 platziert. Der Punkt Z wird dabei quer zum Fahrschlauch 14, also hier in der Fahrzeugquerrichtung Q senkrecht zur Fahrzeuglängsrichtung L, mittig in den Fahrschlauch 14 gelegt. Der Punkt Z befindet sich also auf halber Breite innerhalb des Fahrschlauches 14. Der Kollisionsbereich 9 wird dabei derart bestimmt, dass ausgehend von dem Kraftfahrzeug 1 Fahrtrajektorien 18, 19 derart bestimmt werden, dass sie sich in dem Punkt Z schneiden. Die Fahrtrajektorien 18, 19 werden dabei ausgehend von den Außenseiten 10, 12 des Kraftfahrzeugs 1 beziehungsweise hier ausgehend von Seitenrändern des Kollisionsbereiches 17 als Bogenlinien mit konstantem Radius bestimmt, sodass sie sich in dem Punkt Z schneiden. Durch diese Fahrtrajektorien 18, 19 werden die Maximalradlenkwinkel charakterisiert. Der Kollisionsbereich 9 wird hier von dem Frontbereich 6 des Kraftfahrzeugs 1, beziehungsweise hier von einer Frontseite des Toleranzbereiches 17 sowie von den Fahrtrajektorien 18, 19 begrenzt. Der Abstand x zwischen dem Punkt Z und dem Kraftfahrzeug 1 wird dabei in Abhängigkeit von einer Geschwindigkeit des Kraftfahrzeugs 1 vorgegeben. Je näher sich der Punkt Z am Kraftfahrzeug 1 befindet, desto kleiner wird der Kollisionsbereich 9. Dann wird wieder überprüft, ob sich die Objekte P1, P2 innerhalb oder außerhalb des Kollisionsbereiches 9 befinden und gegebenenfalls die kollisionsvermeidende Maßnahme eingeleitet. Durch die Vorgabe des Punktes Z kann somit der Kollisionsbereich 9 besonders einfach und unaufwändig bestimmt werden.

## Patentansprüche

1. Verfahren zur Vermeidung einer Kollision eines Kraftfahrzeugs (1) mit einem, von einer fahrzeugseitigen Erfassungseinrichtung (4) erfassten Objekt (P1, P2) in einem Umgebungsbereich (3) des Kraftfahrzeugs (1),
**dadurch gekennzeichnet, dass**
bei Erfassung des Objektes (P1, P2) in dem Umgebungsbereich (3) ein Kollisionsbereich (9) in Abhängigkeit von vorbestimmten, beidseitigen Maximalradlenkwinkeln des Kraftfahrzeugs (1) bestimmt wird und eine kollisionsvermeidende Maßnahme für das Kraftfahrzeug (1) eingeleitet wird, falls sich das Objekt (P1, P2) innerhalb des Kollisionsbereiches (9) befindet.

2. Verfahren nach Anspruch 1,
**dadurch gekennzeichnet, dass**
als die kollisionsvermeidende Maßnahme das Kraftfahrzeug (1) automatisch abgebremst wird.

3. Verfahren nach Anspruch 1 oder 2,
**dadurch gekennzeichnet, dass**
als die kollisionsvermeidende Maßnahme ein Warnsignal für einen Fahrer des Kraftfahrzeugs (1) ausgegeben wird.

4. Verfahren nach einem der vorhergehenden Ansprüche,
**dadurch gekennzeichnet, dass**
der Kollisionsbereich (9) in einer Fahrtrichtung (8) des Kraftfahrzeugs (1) auf einer Fahrbahn des Kraftfahrzeugs (1) vor dem Kraftfahrzeug (1) erstreckend und angrenzend an das Kraftfahrzeug (1) bestimmt wird.

5. Verfahren nach einem der vorhergehenden Ansprüche,
**dadurch gekennzeichnet, dass**
ein das Kraftfahrzeug (1) umgebender Toleranzbereich (17) bestimmt wird und der Kollisionsbereich (9) in Abhängigkeit von dem Toleranzbereich (17) bestimmt wird.

6. Verfahren nach einem der vorhergehenden Ansprüche,
**dadurch gekennzeichnet, dass**
der Kollisionsbereich (9) in Abhängigkeit von einer aktuellen Geschwindigkeit des Kraftfahrzeugs (1) bestimmt wird.

7. Verfahren nach einem der vorhergehenden Ansprüche,
**dadurch gekennzeichnet, dass**
zum Bestimmen des Kollisionsbereiches (9) ein Wert für eine maximal zulässige Änderung des Radlenkwinkels des Kraftfahrzeugs (1) vorgegeben wird und die beidseitigen Maximalradlenkwinkel in Abhängigkeit von einem aktuellen Radlenkwinkel des Kraftfahrzeugs (1) und dem maximal zulässigen Wert für die Änderung bestimmt werden.

8. Verfahren nach Anspruch 7,
**dadurch gekennzeichnet, dass**
basierend auf einem ersten Maximalradlenkwinkel zum rechtsseitigen Ausweichen eine erste Fahrtrajektorie (11) ausgehend von dem Kraftfahrzeug (1) geplant wird, basierend auf einem zweiten Maximalradlenkwinkel zum linksseitigen Ausweichen eine zweite Fahrtrajektorie (13) ausgehend von dem Kraftfahrzeug (1) geplant wird und die Fahrtrajektorien (11, 13) als Begrenzungen des Kollisionsbereiches (9) bestimmt werden.

9. Verfahren nach Anspruch 7 oder 8,
**dadurch gekennzeichnet, dass**
der Wert für die maximal zulässige Änderung des Radlenkwinkels in Abhängigkeit von der aktuellen Geschwindigkeit des Kraftfahrzeugs (1) vorgegeben wird.

10. Verfahren nach einem der Ansprüche 1 bis 6,
**dadurch gekennzeichnet, dass**
in Abhängigkeit von einem aktuellen Radlenkwinkel des Kraftfahrzeugs (1) ein in Fahrtrichtung (8) des Kraftfahrzeugs (1) vor dem Kraftfahrzeug (1) liegender Fahrschlauch (14) für das Kraftfahrzeug (1) bestimmt wird, durch welchen ein voraussichtlich von dem Kraftfahrzeug (1) befahrener Bereich charakterisiert wird, ein Punkt (Z) innerhalb des Fahrschlauches (14) bestimmt wird, ausgehend von Kraftfahrzeug (1) zwei Fahrtrajektorien (18, 19) derart bestimmt werden, dass sie sich in dem Punkt (Z) schneiden, und die sich in dem Punkt (Z) schneidenden, die Maximalradlenkwinkel charakterisierenden Fahrtrajektorien (18, 19) als Begrenzungen des Kollisionsbereiches (9) bestimmt werden.

11. Verfahren nach Anspruch 10,
**dadurch gekennzeichnet, dass**
ein Abstand (x) des Punktes (Z) zu dem Kraftfahrzeug (1) in Abhängigkeit von einer Geschwindigkeit des Kraftfahrzeugs (1) bestimmt wird.

12. Verfahren nach Anspruch 10 oder 11,
**dadurch gekennzeichnet, dass**
der Punkt (Z) in einer Richtung senkrecht zu einer Fahrtrichtung (8) des Kraftfahrzeugs (1) mittig in dem Fahrschlauch (14) liegend bestimmt wird.

13. Fahrerassistenzsystem (2) für ein Kraftfahrzeug (1) mit einer Erfassungseinrichtung (4) zum Erfassen eines Objektes (P1, P2) in einem Umgebungsbereich (3) des Kraftfahrzeugs (1) und mit einer Steuereinrichtung (5), welche dazu ausgelegt ist, ein Verfahren nach einem der vorhergehenden Ansprüche durchzuführen.

14. Kraftfahrzeug (1) mit einem Fahrerassistenzsystem (2) nach Anspruch 13.

## Claims

1. Method for avoiding a collision of a motor vehicle (1) with an object (P1, P2) detected by a detection device (4) on the vehicle in a surrounding area (3) of the motor vehicle (1),
**characterized in that**
when the object (P1, P2) is detected in the surrounding area (3), a collision area (9) is determined as a function of predetermined maximum wheel steering angles on both sides of the motor vehicle (1), and a collision-avoiding measure for the motor vehicle (1) is initiated if the object (P1, P2) is located within the collision area (9).

2. Method according to Claim 1,
**characterized in that**
as the collision-avoiding measure, the motor vehicle (1) is automatically braked.

3. Method according to Claim 1 or 2,
**characterized in that**
as the collision-avoiding measure, a warning signal for a driver of the motor vehicle (1) is output.

4. Method according to one of the preceding claims, **characterized in that**
the collision area (9) is determined in a direction of travel (8) of the motor vehicle (1) on a roadway of the motor vehicle (1) extending in front of the motor vehicle (1) and adjacent to the motor vehicle (1).

5. Method according to one of the preceding claims, **characterized in that**
a tolerance area (17) surrounding the motor vehicle (1) is determined and the collision area (9) is determined as a function of the tolerance area (17).

6. Method according to one of the preceding claims, **characterized in that**
the collision area (9) is determined as a function of a current speed of the motor vehicle (1).

7. Method according to one of the preceding claims, **characterized in that**
to determine the collision area (9), a value for a maximum permissible change in the wheel steering angle of the motor vehicle (1) is predefined, and the maximum wheel steering angles on both sides are determined as a function of a current wheel steering angle of the motor vehicle (1) and the maximum permissible value for the change.

8. Method according to Claim 7,
**characterized in that**
a first travel trajectory (11) starting from the motor vehicle (1) is planned on the basis of a first maximum wheel steering angle for the right-hand side evasion, a second travel trajectory (13) starting from the motor vehicle (1) is planned on the basis of a second maximum wheel steering angle for the left-hand side evasion, and the travel trajectories (11, 13) are determined as boundaries of the collision area (9).

9. Method according to Claim 7 or 8,
**characterized in that**
the value for the maximum permissible change in the wheel steering angle is predefined as a function of the current speed of the motor vehicle (1).

10. Method according to one of Claims 1 to 6, **characterized in that**
as a function of a current wheel steering angle of the motor vehicle (1), a driving path (14) for the motor vehicle (1) lying in front of the motor vehicle (1) in the direction of travel (8) of the motor vehicle (1) is determined, which path characterizes an area likely to be travelled over by the motor vehicle (1), a point (Z) within the driving path (14) is determined, two driving trajectories (18, 19) starting from the motor vehicle (1) are determined in such a way that they intersect at the point (Z), and the driving trajectories (18, 19) characterizing the maximum wheel steering angles and intersecting at the point (Z) are determined as boundaries of the collision area (9).

11. Method according to Claim 10,
**characterized in that**
a distance (x) of the point (Z) from the motor vehicle (1) is determined as a function of a speed of the motor vehicle (1).

12. Method according to Claim 10 or 11,
**characterized in that**
the point (Z) is determined in a direction at right angles to a direction of travel (8) of the motor vehicle (1) and lying centrally in the driving path (14).

13. Driver assistance system (2) for a motor vehicle (1), comprising a detection device (4) for detecting an object (P1, P2) in a surrounding area (3) of the motor vehicle (1), and comprising a control device (5) which is designed to carry out a method according to one of the preceding claims.

14. Motor vehicle (14) having a driver assistance system (2) according to Claim 13.

## Revendications

1. Procédé permettant d'éviter une collision d'un véhicule automobile (1) avec un objet (P1, P2), détecté par un dispositif de détection (4) côté véhicule, dans une zone environnante (3) du véhicule automobile (1),
**caractérisé en ce que** lors de la détection de l'objet (P1, P2) dans la zone environnante (3), une zone de collision (9) est déterminée en fonction d'angles de braquage de roue maximum, bilatéraux, prédéterminés du véhicule automobile (1), et une mesure anticollision est prise pour le véhicule automobile (1) si l'objet (P1, P2) se trouve à l'intérieur de la zone de collision (9).

2. Procédé selon la revendication 1, **caractérisé en ce que** comme mesure anticollision, le véhicule automobile (1) est freiné automatiquement.

3. Procédé selon la revendication 1 ou 2, **caractérisé en ce que** comme mesure anticollision, un signal d'alarme est émis pour un conducteur du véhicule automobile (1).

4. Procédé selon l'une quelconque des revendications précédentes, **caractérisé en ce que** la zone de collision (9) est déterminée dans un sens de la marche (8) du véhicule automobile (1) sur une voie de circulation du véhicule automobile (1) en s'étendant devant le véhicule automobile (1) et en étant adjacente au véhicule automobile (1).

5. Procédé selon l'une quelconque des revendications précédentes, **caractérisé en ce qu'**une zone de tolérance (17) entourant le véhicule automobile (1) est déterminée, et la zone de collision (9) est déterminée en fonction de la zone de tolérance (17).

6. Procédé selon l'une quelconque des revendications précédentes, **caractérisé en ce que** la zone de collision (9) est déterminée en fonction d'une vitesse actuelle du véhicule automobile (1).

7. Procédé selon l'une quelconque des revendications précédentes, **caractérisé en ce que** pour la détermination de la zone de collision (9), une valeur pour une variation admissible au maximum de l'angle de braquage de roue du véhicule automobile (1) est prédéfinie, et les angles de braquage de roue maximum bilatéraux sont déterminés en fonction d'un angle de braquage de roue actuel du véhicule automobile (1) et de la valeur admissible au maximum pour la variation.

8. Procédé selon la revendication 7, **caractérisé en ce que** sur la base d'un premier angle de braquage de roue maximum pour un évitement à droite, une première trajectoire de conduite (11) est planifiée en partant du véhicule automobile (1), sur la base d'un deuxième angle de braquage de roue maximum pour un évitement à gauche, une deuxième trajectoire de conduite (13) est planifiée en partant du véhicule automobile (1), et les trajectoires de conduite (11, 13) sont déterminées comme les limites de la zone de collision (9).

9. Procédé selon la revendication 7 ou 8, **caractérisé en ce que** la valeur pour la variation admissible au maximum de l'angle de braquage de roue est prédéfinie en fonction de la vitesse actuelle du véhicule automobile (1).

10. Procédé selon l'une quelconque des revendications 1 à 6, **caractérisé en ce qu'**en fonction d'un angle de braquage de roue actuel du véhicule automobile (1), un tunnel de conduite (14) se trouvant devant le véhicule automobile (1) dans le sens de la marche (8) du véhicule automobile (1) est déterminé pour le véhicule automobile (1), ledit tunnel caractérisant une zone qui sera probablement parcourue par le véhicule automobile (1), **en ce qu'**un point (Z) est déterminé à l'intérieur du tunnel de conduite (14), **en ce qu'**en partant du véhicule automobile (1) deux trajectoires de conduite (18, 19) sont déterminées de façon à se croiser au point (Z), et **en ce que** les trajectoires de conduite (18, 19) se croisant au point (Z) et caractérisant les angles de braquage de roue maximum sont déterminées comme les limites de la zone de collision (9).

11. Procédé selon la revendication 10, **caractérisé en ce qu'**une distance (x) du point (Z) par rapport au véhicule automobile (1) est déterminée en fonction d'une vitesse du véhicule automobile (1).

12. Procédé selon la revendication 10 ou 11, **caractérisé en ce que** le point (Z) est déterminé dans une direction perpendiculaire à un sens de la marche (8) du véhicule automobile (1) en se trouvant au centre dans le tunnel de conduite (14).

13. Système d'assistance au conducteur (2) pour un véhicule automobile (1), comprenant un dispositif de détection (4) servant à détecter un objet (P1, P2) dans une zone environnante (3) du véhicule automobile (1) et un dispositif de commande (5) qui est conçu pour exécuter un procédé selon l'une quelconque des revendications précédentes.

14. Véhicule automobile (1) comprenant un système d'assistance au conducteur (2) selon la revendication 13.
